# EUROPÄISCHE PATENTANMELDUNG

(11) **EP 0 590 493 A1**
(43) Veröffentlichungstag der Anmeldung: **06.04.1994**
(21) Anmeldenummer: 93115267.2
(22) Anmeldetag: 22.09.1993
(51) Int. Cl.: H04M 1/56, G09G 3/20

(54) **Mobiltelefon**

(30) Priorität: 01.10.1992 DE 4233071
(71) Anmelder: SIEMENS AKTIENGESELLSCHAFT, D-80333 München (DE)
(72) Erfinder: Christal, Philip, D-85646 Anzing (DE); Hettrich, Roland, Dipl.-Ing., D-85244 Röhrmoos (DE)

(57) **Zusammenfassung**

Das Anzeigefeld des Mobiltelefons besteht aus einem flexibel gestaltbaren Graphik-Display mit einer Vielzahl (> 3000) Knotenpunkten (Pixels), die individuell ansteuerbar sind.

## Beschreibung

Die Erfindung bezieht sich auf ein Mobiltelefon mit einem Tastenfeld mit Wähl- und Funktionstasten und einem Anzeigefeld und mit ggf. im Bedienteil integrierten Sende-/Empfangseinrichtungen (Handheld).

Die vor längerer Zeit gebräuchlichen Telefone hatten wenig Probleme mit dem Mensch-Maschine-Interface; es war einfach: Wählen und Sprechen. Technologische Fortschritte haben eine beeindruckende Menge von Merkmalen im Telefonwesen gebracht, z.B. das Memory zum Zweck einer effizienten Nutzung des Mobiltelefons. Diese Fortschritte sind besonders deutlich bei den heutigen Mobiltelefonen erkennbar mit Rufumleitung (Divert), Rufsperren (Call barring) usw. Das Problem ist, daß die Benutzer diese Fortschritte nicht genügend nutzen und spezielle Einweisungen nicht durchgeführt werden. Dieses Problem nimmt zu und mit der GSM (Group Special Mobile)-Technologie kommen viele neue und wertvolle Merkmale hinzu von Netzwerk, Mobiltelefon und der verwendeten Chipkarte (SIM), für deren effektive Nutzung nicht die erforderlichen Voraussetzungen gegeben sind. Die Benutzer dieser Technologie sind zunehmend weniger technisch versiert, ein Trend der sich beschleunigt in dem Maße, wie diese Produkte den Verbrauchermarkt ansprechen.

Bedienungsanleitungen können eine Lösung für einen eingeweihten Benutzer bringen, indes werden diese jedoch kaum gelesen und ermündende Bezugnahmen schrecken die meisten Benutzer von allem ab. Anzeigefelder (Displays) am Telefon nehmen immer mehr zu, jedoch ist die angezeigte Information sehr begrenzt. In den meisten Fällen wird die gewählte Nummer angezeigt, manchmal unterstützt durch unklare Symbole mit der Absicht, den relevanten, oft technischen Status zu übermitteln.

Es besteht jedoch in der mobilen Kommunikationstechnik ein Bedarf zur Anzeige weiterer Informationen. Dabei handelt es sich um Produkte, die in ihrer Größe verrringert sind, wobei diese Verkleinerung Probleme mit sich bringt hinsichtlich der Lesbarkeit der Informationen. Eine gute Lesbarkeit auf dem Display ist daher ein Kriterium bei potentiellen Käufern und hat einen großen Einfluß auf deren Entscheidung.

Bei Mobiltelefonen werden verschiedentlich LCD-Displays benutzt, die in der Lage sind, bis zu vier Zeilen von zwölf Buchstaben oder numerischen Zeichen anzuzeigen, in einigen Fällen unterstützt von kleinen graphischen Symbolen. Es ist ein festes Format für die Displays mit vorgegebenen 7 x 5 Knotenpunkten (Pixel) alphanumerischer Zeichen vorgesehen. Dies stellt einen Kompromiß dar mit einem generell geringen Ergebnis hinsichtlich der Lesbarkeit.

Der Erfindung liegt die Aufgabe zugrunde, eine Lösung zu schaffen für eine für den Benutzer hinsichtlich der Lesbarkeit hilfreiche Gestaltung des Displays.

Diese Aufgabe wird gemäß der Erfindung in der Weise gelöst, daß das Anzeigefeld (Display) aus einem flexibel gestaltbaren Graphik-Display mit einer Vielzahl von über 3000 Knotenpunkten (Pixels) aus der Verknüpfung sich kreuzender waagerechter und senkrechter Leitungen, die nach einem vorgebbaren Steuerungsablauf individuell ansteuerbar sind.

Beim Mobiltelefon kann mit diesem Display eine sehr große Menge und Vielfalt von Informationen angezeigt werden. Es können auf diese Weise spezifische Fonts und Graphiken dargestellt werden, insbesondere auch dynamische Graphiken. Die im Display angezeigten Symbole sind damit unabhängig von der Display-Hardware flexibel darstellbar.

Von besonderem Vorteil ist ferner eine 90°-Drehung der Darstellungsart im Display durch entsprechende Ansteuerung der Knotenpunkte, wodurch eine Neuorientierung der Graphik erfolgt und das Display des Mobiltelefons in vertikaler oder horizontaler Richtung gelesen werden kann.

In vorteilhafter Weiterbildung des Erfindungsgegenstandes ist ferner vorgesehen, daß die einzelnen Zeichen innerhalb des Display in ihrer Breite und/oder Höhe und/oder im Zeichensatz variabel darstellbar sind.

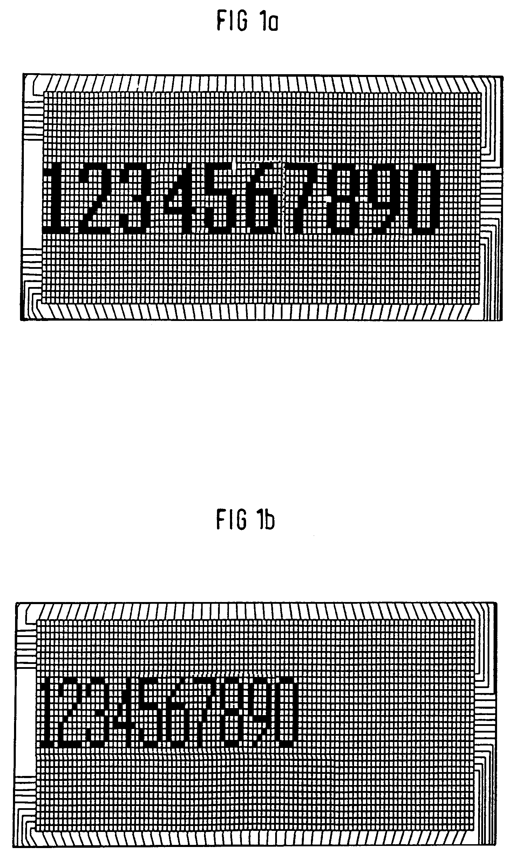

Nachstehend wird die Erfindung anhand eines in der Zeichnung dargestellten Ausführungsbeispieles näher erläutert. Das Display besteht entsprechend der erfindungsgemäßen Gestaltung aus einer Vielzahl von über 3000 Verbindungsknoten (Pixels). Diese Verbindungsknoten werden vom Schnittpunkt einer Vielzahl von waagerechten und senkrechten Leitungen gebildet, die einzeln ansteuerbar sind.

Auf einem derart ausgebildeten Display sind in der Figur in zwei Darstellungen die Ziffern 1, 2 ... 9, 0 in unterschiedlicher Breite wiedergegeben. Mit diesem neuen graphischen Display ist es also möglich, innerhalb der physikalischen Grenzen des Displays Zeichen unterschiedlicher Größe darzustellen. Die Lesbarkeit von Zahlen, die gewählt werden, ist primäres Erfordernis für die meisten Benutzer. Das Display formt dabei diese einstelligen Zahlen (Digits) von 11 x 7 Pixels, was die Darstellung von 11 Digits ermöglicht. Für den Fall, daß die Benutzer weitere Digits eingeben, beispielsweise für eine längere Telefonnummer, werden die Digits auf ein 11 x 5 Format komprimiert, wodurch 16 Digits in einer einzelnen Zeile dargestellt werden können. Die Eingabe weiterer Digits bewirkt einen Wechsel des Font zu 7 x 5 Pixels, was die Darstellung von zwei Zeilen von 16 Digits erlaubt. Damit erhält man also ein visuell attraktives Display hoher Lesbarkeit, auf dem vorrangige Informationen besonders hervorgehoben werden können.

## Patentansprüche

1. Mobiltelefon mit einem Tastenfeld mit Wähl- und Funktionstasten und einem Anzeigefeld und mit ggf. im Bedienteil integrierten Sende-/Empfangseinrichtungen (Handheld),
**dadurch gekennzeichnet,**
daß das Anzeigefeld aus einem flexibel gestaltbaren Graphik-Display mit einer Vielzahl von über 3000 Knotenpunkten aus der Verknüpfung sich kreuzender waagerechter und senkrechter Leitungen (Pixels) besteht, die nach einem vorgebbaren Steuerungsablauf individuell ansteuerbar sind.

2. Mobiltelefon nach Anspruch 1,
**dadurch gekennzeichnet,**
daß die Darstellung am Display durch eine entsprechende Ansteuerung der Knotenpunkte um 90° drehbar ist.

3. Mobiltelefon nach Anspruch 1 oder 2,
**dadurch gekennzeichnet,**
daß die einzelnen Zeichen innerhalb des Display in ihrer Breite und/oder Höhe und/oder im Zeichensatz variabel darstellbar sind.
